# EUROPÄISCHE PATENTANMELDUNG

(11) **EP 0 947 693 A2**
(43) Veröffentlichungstag der Anmeldung: **06.10.1999**
(21) Anmeldenummer: 99104853.9
(22) Anmeldetag: 11.03.1999
(51) Int. Cl.: F03D 1/06

(54) **Rotorblatt für eine Windkraftanlage**

(30) Priorität: 31.03.1998 DE 19815519
(71) Anmelder: Tacke Windenergie GmbH, 48499 Salzbergen (DE)
(72) Erfinder: Jaquemotte, Klaus-Peter, 48485 Neuenkirchen (DE)
(74) Vertreter: Eisenführ, Speiser & Partner

(57) **Zusammenfassung**

Rotorblatt (7; 17; 27; 37; 47; 57) für eine nach dem Passiv-Stall- oder Aktiv-Stall-Prinzip arbeitende Windkraftanlage (1), das mindestens für einen Abschnitt seiner Länge ein Tragflügelprofil (17a; 27a; 37a; 47a; 57a) aufweist und an der Profilvorderkante wenigstens abschnittsweise durch An- oder Einfügung eines Sekundärprofils (17b; 27b; 37b; 47b; 57b) ergänzt ist, wobei sich das Sekundärprofil (17b; 27b; 37b; 47b; 57b) zur Schwingungsdämpfung durchgehend von der Blattspitze des Rotorblattes über einen Teilbereich des Tragflügelprofils in dessen Längsrichtung erstreckt und derart aerodynamisch ausgebildet und relativ zum Tragflügelprofil angeordnet ist, daß es wenigstens in einem Anströmwinkelbereich, der im wesentlichen mit dem Anströmwinkel beginnt, bei dem die Strömungsablösung an der Profilhinterkante des Tragflügelprofils (17a; 27a; 37a; 47a; 57a) einsetzt, eine mit dem Anströmwinkel des Tragflügelprofils (17a; 27a; 37a; 47a; 57a) zunehmende partielle Strömungsablösung im Bereich der Profilvorderkante des Tragflügelprofils (17a; 27a; 37a; 47a; 57a) erzeugt.

## Beschreibung

Die Erfindung betrifft ein Rotorblatt für eine Windkraftanlage gemäß dem Oberbegriff des Anspruchs 1.

Die mechanischen und aerodynamischen Eigenschaften der Rotorblätter von Windkraftanlagen sind von erheblicher Bedeutung für die praktischen Einsatzmöglichkeiten solcher Anlagen und damit auch für die effektiven Kosten der erzeugten Energie.

Bei den derzeit eingesetzten Windkraftanlagen mit Rotordurchmessern von weit über 40, zum Teil über 60, Metern treten infolge des Höhenprofils der Windgeschwindigkeit oder von baulich bedingten Windgeschwindigkeitsgradienten (Turmschatten bei Anlagen mit leeseitigen Rotor bzw. Turmvorstau bei Anlagen mit luvseitigem Rotor), Schräganströmung der Anlage, Strömungsabriß oder Turbulenzen u.U. erhebliche Kraftwirkungen auf, die wegen ihres oft stoßartigen Charakters zu unerwünschten Schwingungen der Rotorblätter führen können. Besonders relevant sind Schwenkschwingungen in Drehrichtung des Rotorblattes, Auslenkungen aus der von diesem aufgespannten Ebene ("Schlag") und daneben Torsionsschwingungen um die Längsachse des Rotorblattes.

Derartige Schwingungen können die Lebensdauer des Rotorblattes drastisch verkürzen, belasten die Nabenlagerung, verringern die Effizienz der Windenergieausnutzung und können nicht zuletzt zu einer inakzeptablen Lärmemission führen.

Es sind daher in den letzten Jahren zahlreiche Versuche zur Bekämpfung dieser Erscheinungen unternommen worden.

In der internationalen Patentanmeldung WO-A-94/17303 ist eine - insbesondere mehrlagige - Gummibeschichtung für ein Rotorblatt aus glasfaserverstärktem Kunstharz beschrieben, welche speziell zur Verringerung der Geräuschemission dienen soll. Ergänzend hierzu wird eine Ausfüllung der Profilhohlräume mit lose geschütteten Polystyrolkügelchen o.ä. zur Dämpfung von sich innerhalb der Profilquerschnitts ausbildenden Luftschwingungen vorgeschlagen.

Diese Lösung ist jedoch technologisch aufwendig und erhöht die Herstellungskosten erheblich.

In der internationelen Patentanmeldung WO-A-95/19500 wird - ebenfalls mit dem Ziel einer Verringerung der Geräuschemission, die Anordnung eines Gewebestreifens an der Blatthinterkante vorgeschlagen, mit dem die Wirbelbildung in diesem Bereich des Rotorblattes vermindert werden soll. Diese Maßnahme ist jedoch (ganz abgesehen von zu erwartenden Lebensdauerproblemen) ebenfalls nicht zu einer nennenswerten Reduzierung der Rotorblattschwingungen geeignet.

Eine weitere aus der internationalen Patentanmeldung WO-A-93/21327 bekannte Lösung umfaßt den Einbau schwingungsreduzierender Elemente in das Rotorblatt, und zwar einer Masse, mindestens eines elastischen Elementes und mindestens eines Dämpfungselementes. Für diese Grundelemente werden verschiedene denkbare Ausführungen vorgeschlagen, deren praktische Realisierung aber technisch sehr aufwendig ist. Bewegliche Teile tendieren darüber hinaus zu einer zusätzlichen Geräuschbildung.

In der internationalen Patentanmeldung WO-A-97/01709 wird zur Reduzierung der Körperschwingungen des Rotorblattes ebenfalls der Einbau schwingungsreduzierender Elemente in das Rotorblatt vorgeschlagen. Insbesondere ist dabei innerhalb des Rotorblattes eine Masse beweglich angebracht, die mit an sich bekannten Einrichtungen zur Veränderung des aerodynamischen Profils des Rotorblattes verbunden ist und diese betätigt. Zusätzlich sind auch feste Elemente zur Veränderung des Profilquerschnitts vorgesehen. Auch diese Lösung ist konstruktiv und herstellungstechnisch sehr aufwendig und dürfte zudem wegen der bewegten Teile und der benötigten Kraftübertragungsmittel auch sehr wartungsaufwendig sein.

Der Erfindung liegt deshalb die Aufgabe zugrunde, ein Rotorblatt anzugeben, bei dem eine deutlich verringerte Schwingungsneigung mit vergleichsweise einfachem Aufbau und daher mit geringen Kosten erreicht wird. Mit dem verbesserten Rotorblatt soll insbesondere auch eine Verringerung der dynamischen Hystereseeffekte im Arbeitsbereich der Windkraftanlage erreicht werden.

Die Aufgabe wird durch ein Rotorblatt mit den im Anspruch 1 angegebenen Merkmalen gelöst.

Die Erfindung beruht auf der Erkenntnis, daß sich bei der Leistungsbegrenzung sowohl von nach dem Passiv-Stall- als auch solcher nach dem Aktiv-Stall-Prinzip arbeitenden Windkraftanlagen, die auf der Ausnutzung des Strömungsabrisses am Rotorblatt bei hohen Anströmgeschwindigkeiten beruhen, sich bei böigem Wind, Windscherung etc. aber dynamische Auftriebskraftüberhöhungen am Rotorblatt einstellen, die bei wechselnder Anströmrichtung aufgrund instationärer Vorgänge zur Ausbildung von Hystereseschleifen in den aerodynamischen Kräften führen, mit denen zusätzliche, schwer abschätz- und kontrollierbare Belastungen für die Rotorblätter einhergehen.

Mit der Erfindung werden
(a) die bei stoßartig auftretenden Strömungsänderungen zu Schwingungen führenden aerodynamischen Kräfte und Momente am Rotorblatt minimiert bzw. in einen unschädlichen Bereich verschoben,
(b) eine aerodynamische Dämpfung der Schwingungen bewirkt sowie
(c) Leistungsschwankungen bei Böen, Schräganströmung etc. minimiert.

Die Erfindung schließt die grundsätzliche Überlegung ein, ein verbessertes Schwingungsverhalten des Rotorblattes gezielt ohne Änderung des inneren Aufbaus und bevorzugt ohne bewegte Teile im Rotorblatt und damit in Abkehr von dem im Stand der Technik vorgezeichneten Entwicklungstrend dadurch zu erreichen, daß stoßartigen Veränderungen der Strömungsverhältnisse durch eine Kraftkompensation entgegengewirkt wird. Diese Kraftkompensation wird durch Annäherung der aerodynamischen Verhältnisse an der Blattvorder- und Hinterkante bei stark ansteigender Anströmung (Stall) erzielt. Auf diese Weise wird insbesondere eine schädliche Torsion der Rotorblätter verhindert.

Die Erfindung schließt weiterhin den Gedanken ein, hierbei die Auswirkungen von instationären dynamischen Vorgängen auf das dynamische Verhalten des Rotorblattes (im Bereich des von der Blatthinterkante her beginnenden Strömungsabrisses) durch zusätzliche Erzeugung eines instationären Vorganges ähnlicher physikalischer Natur im Bereich der Blattvorderkante ("Nase") zu minimieren.

Hierzu ist das Sekundärprofil derart aerodynamisch ausgebildet und relativ zum Tragflügelprofil angeordnet, daß es wenigstens in einem Anströmwinkelbereich, der im wesentlichen mit dem Anströmwinkel beginnt, bei dem die Strömungsablösung an der Profilhinterkante des Tragflügelprofils einsetzt, eine mit dem Anströmwinkel des Tragflügelprofils zunehmende partielle Strömungsablösung im Bereich der Profilvorderkante des Tragflügelprofils erzeugt. Diese partielle Strömungsablösung im Bereich der Profilvorderkante bewirkt einen Auftriebsverlust über dem Tragflügelprofil, der zum einen der mit steigendem Anstellwinkel auftretenden dynamischen Auftriebsüberhöhung am Tragflügelprofil entgegenwirkt und somit die damit verbundenen Hystereseeffekte reduziert, die das Rotorblatt zu Schwingungen anregen. Dabei wird durch die aufeinander abgestimmte partielle Strömungsablösung an der Vorder- und Hinterkante auch ein Ausbalancieren der Auftriebsverteilung über das Tragflügelprofil erzielt und somit in vorteilhafter Weise das Torsionsmoment im Rotorblatt reduziert. Dies ist insbesondere deswegen von Bedeutung, weil eine unkontrollierte Torsionsverformung des Blattes infolge des damit einhergehenden vergrößerten Anstellwinkels auch zu einer entsprechend zu vermeidenden unkontrollierten Biegung des in Längsrichtung führt.

Zur zweckmäßigen Ausführung der Erfindung gehört schließlich der Gedanke, das Rotorblattprofil durch optimierte aerodynamische Ausbildung der "Blattnase" und ggfs. zusätzlich durch Maßnahmen zur Auftriebsverlustkompensation zugleich auch im Hinblick auf den Energieertrag im Normalbetrieb zu optimieren. Hierzu wird vorgeschlagen, das Sekundärprofil nur über einen im Bereich der Blattspitze beginnenden Teilbereich des Tragflügelprofils vorzusehen. Während das über diesen Teilbereich vorgesehene Sekundärprofil ausreicht, um eine genügende Schwingungsdämfpung zu erzielen, wird der durch das Sekundärprofil möglicherweise bedingte Verlust durch die Beschränkung des Sekundärprofils auf einen Teilbereich des Tragflügelprofils möglichst gering gehalten. Vorzugsweise erstreckt sich das Sekundärprofil dabei in Abhängigkeit von der Geometrie und der Steifigkeit des Rotorblattes lediglich über eine zur Schwingungsdämpfung ausreichende Länge in Längsrichtung des Rotorblattes. Hierbei erstreckt sich das Sekundärprofil in der Regel vorzugsweise etwa bis in den mittleren Bereich des Tragflügelprofils.

Bei besonders bevorzugten Ausführungen des erfindungsgemäßen Rotorblattes sind zur im wesentlichen vollständigen Kompensation des Rotormomentverlustes, der durch die Auftriebsverminderung infolge des Sekundärprofils bedingt ist, in einem sich im wesentlichen von dem nabenseitigen Ende bis in den mittleren Bereich des Tragflügelprofils erstreckenden Bereich des auftriebserhöhende Mittel vorgesehen sind. Diese bewirken nicht nur eine Auftriebserhöhung in dem Bereich des Rotorblattes, in dem sie angeordnet sind, sie beeinflussen zudem die dreidimensionale Umströmung des Rotorblattes in einer Weise, daß sich auch über den restlichen Rotorblattbereich größere Anstellwinkel einstellen, wodurch eine zusätzliche Verringerung des Auftriebsverlustes eintritt.

In einer vorteilhaften Variante der Erfindung handelt es sich bei den auftriebserhöhenden Mitteln um eine Mehrzahl von im Bereich der Profilvorderkante oder der Profiloberseite angeordneten Vortex-Generatoren.

Alternativ oder in Kombination mit diesen können Mittel zur Absaugung von Luft aus dem Grenzschichtbereich des Rotorblattes auf dessen Profiloberseite jenseits der Ebene seiner größten transversalen Erstreckung oder Mittel zur Ausblasung von Luft in diesen Grenzschichtbereich vorgesehen sein.

Weiterhin können - sofern die Spezifik des Anwendungsfalles den erhöhten Aufwand für aktiv gesteuerte Komponenten rechtfertigt - im Bereich der Profilvorder-und/oder -hinterkante verstellbare Klappen zur steuerbaren Auftriebserhöhung vorgesehen sein. Auch diese Maßnahme ist mit den bereits genannten Maßnahmen zur Auftriebsverlustkompensation kombinierbar.

Das Sekundärprofil an der Profilvorderkante zur Erzeugung eines partiellen Strömungsabrisses weist in bevorzugter Ausführung im wesentlichen den Querschnitt eines Ellipsen- oder Tragflügelsegmentes auf. Hierunter fällt als einfachste Ausführung auch ein im Querschnitt kreis- oder kreissegmentförmiges schwingungsdämpfendes Sekundärprofil.

Die auftriebserhöhenden Mittel werden insbesondere im nabennahen Bereich des Rotorblattes, speziell in der inneren Hälfte seines Gesamtradius, eingesetzt, da sie dort die energetische Effizienz des Rotors am spürbarsten erhöhen.

Das Sekundärprofil kann dem primären Tragflügelprofil mit in Bezug auf die (die Profilvorderkante und Profilhinterkante verbindenden) Profilsehne geneigter großer Achse bzw. Profilsehne und/oder gegenüber der Profilsehne des Tragflügelprofils versetztem Hauptscheitel bzw. versetzter Profilvorderkante an- oder eingefügt sein, wodurch sich eine Vielzahl von Optimierungsparametern für die anlagen- und ggfs. auch standortbezogene Optimierung ergibt.

Die Übergänge des Sekundärprofilumrisses in den Umriß des primären Tragflügelprofils können unstetig oder stetig ("geglättet") oder auch in den beiden Übergangsbereichen unterschiedlich ausgeführt sein.

Das Sekundärprofil ragt gegenüber der Profilvorderkante des primären Tragflügelprofils bevorzugt um einen Abstand zwischen 0,5% und 15% der Profiltiefe des Rotorblattes vor. Es erstreckt sich von einem anlagenspezifisch bestimmten Anfangspunkt im wesentlichen bis zur Rotorblattspitze. Die Tiefe des Sekundärprofils bietet somit weitere Ansatzpunkte für die anlagenspezifische Optimierung des dynamischen Strömungsabrißverhaltens.

Besonders vorteilhaft ist die Kombination der von den Rotorblattspitzen ausgehenden (nabenfernen) Anordnung des Sekundärprofils als schwingungsdämpfendes Mittel mit der oben angesprochenen bevorzugten Anordnung derauftriebserhöhenden Mittel im zentralen (nabennahen) Bereich des Rotors.

Bei einer anderen vorteilhaften Weiterbildung ist das Sekundärprofil in radialer Richtung des Blattes mit einem veränderlichen Querschnitt ausgeführt. Auf diese Weise kann eine lokale gegenseitige Anpassung der auf das Blatt bei auftretenden Spitzenbelastungen einwirkenden Kräfte im vorderen und hinteren Blattbereich erreicht werden, so daß auch die auftretenden Torsionskräfte lokal ausgeglichen sind. Dies erfolgt bevorzugt in der Weise, daß die Veränderung Querschnitts des Sekundärprofils derart gewählt ist, daß die durch Strömungsablösung im Bereich der Blatthinterkante erzeugte Kraftwirkung über einen Längenabschnitt des Blattes im wesentlichen der durch die Strömungsablösung im Bereich der Profilvorderkante erzeugten Kraftwirkung entspricht.

Andere vorteilhafte Weiterbildungen der Erfindung sind im übrigen in den Unteransprüchen gekennzeichnet bzw. werden nachstehend zusammen mit der Beschreibung bevorzugter Ausführungen der Erfindung anhand der Figuren näher dargestellt. Es zeigen:
- Figur 1: eine schematische perspektivische Darstellung einer Windkraftanlage vom Horizontalrotor-Typ zur Illustration der wesentlichen Winkel- und Richtungsbeziehungen sowie des Kraftverlaufes am Rotorblatt,
- die Figuren 2a und 2b: schematische Querschnittsdarstellungen eines herkömmlichen Rotorblattes der Windkraftanlage des in Fig. 1 skizzierten Typs bei zwei verschiedenen Anstellwinkeln,
- die Figuren 3a und 3b: schematische grafische Darstellungen einer hysteresebehafteten Abhängigkeit der aerodynamischen Kräfte vom Anstellwinkel bei einem herkömmlichen (Fig. 3a) bzw. einem erfindungsgemäßen Rotorblatt (Fig. 3b), das einer dynamischen Belastung unterliegt,
- die Figuren 4a bis 4e: schematische Querschnittsdarstellungen der Profilvorderkantenbereiche bei Ausführungsformen erfindungsgemäßer Rotorblätter und
- die Figuren 5a bis 5e: schematische perspektivische Darstellungen von Vortex-Generatoren als Ausführungsformen auftriebserhöhender Mittel, die im Rahmen der Erfindung eingesetzt werden.

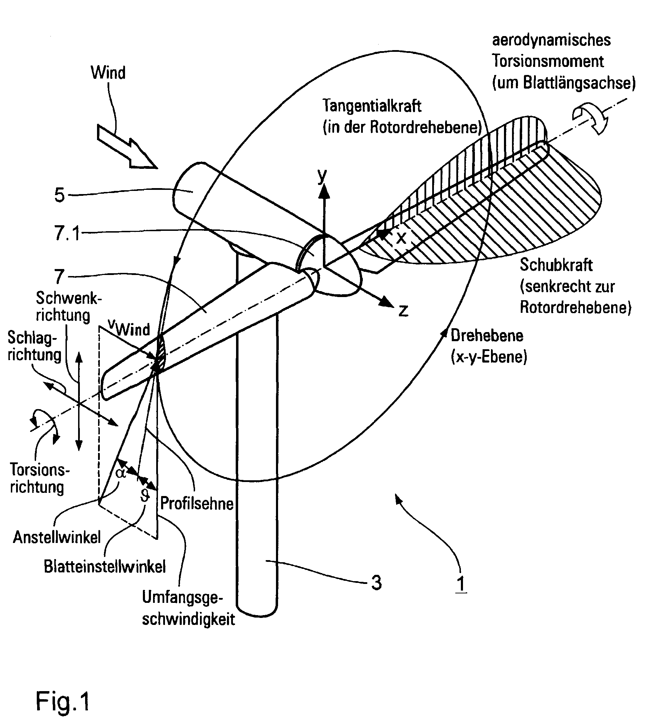

Fig. 1 zeigt in perspektivischer Darstellung eine Windkraftanlage 1 vom Horizontalrotor-Typ mit einem Turm 3, einer Maschinengondel 5 und zwei Rotorblättern 7 auf einer Rotornabe 7.1. In der Figur sind die wesentlichen Winkel- und Richtungsbeziehungen sowie der Kraftverlauf der Schubkraft (senkrecht zur Rotorebene) sowie der Tangentialkraft (in der Rotorebene) in Längsrichtung eines Rotorblattes 7 dargestellt. Die wesentlichen Schwingungsbelastungen des Rotorblattes resultieren aus dem Schwenkmoment um die z-Achse in der xy-Ebene und den beim sogenannten "Schlag" - einer Schwenkbewegung aus der xy-Ebene heraus - auftretenden Kräften und Momenten.

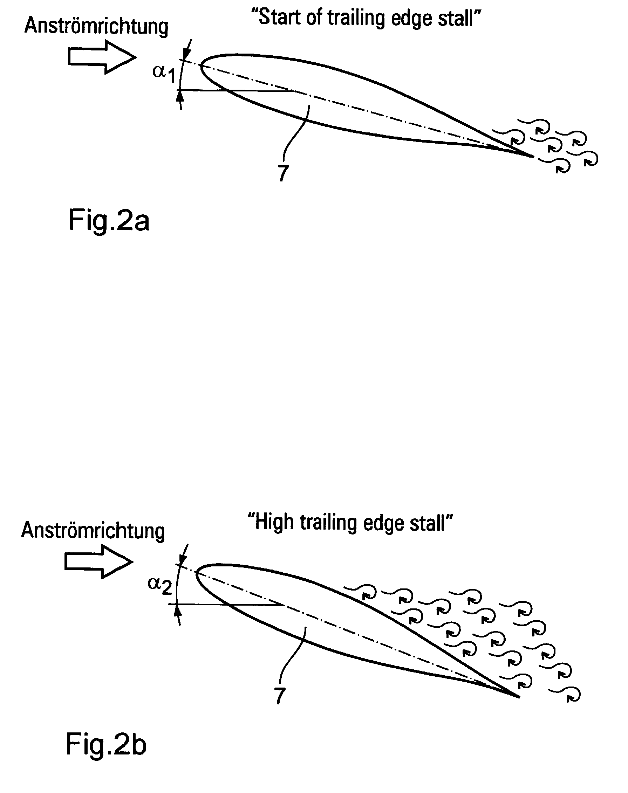

Fig. 2a und 2b zeigen in schematischer Querschnittsdarstellung ein herkömmliches Rotorblatt 7 gemäß Fig. 1 bei zwei verschiedenen Anstellwinkeln α1 bzw. α2 und illustrieren das Einsetzen auftriebsmindernder Verwirbelungen an der Rotorblatthinterkante ("start of trailing edge stall" - Fig. 2a) bzw. das Wandern der Verwirbelungszone über die Rotorblattoberseite in Richtung zur Vorderkante hin mit zunehmender Windgeschwindigkeit ("high trailing edge stall" - Fig. 2b).

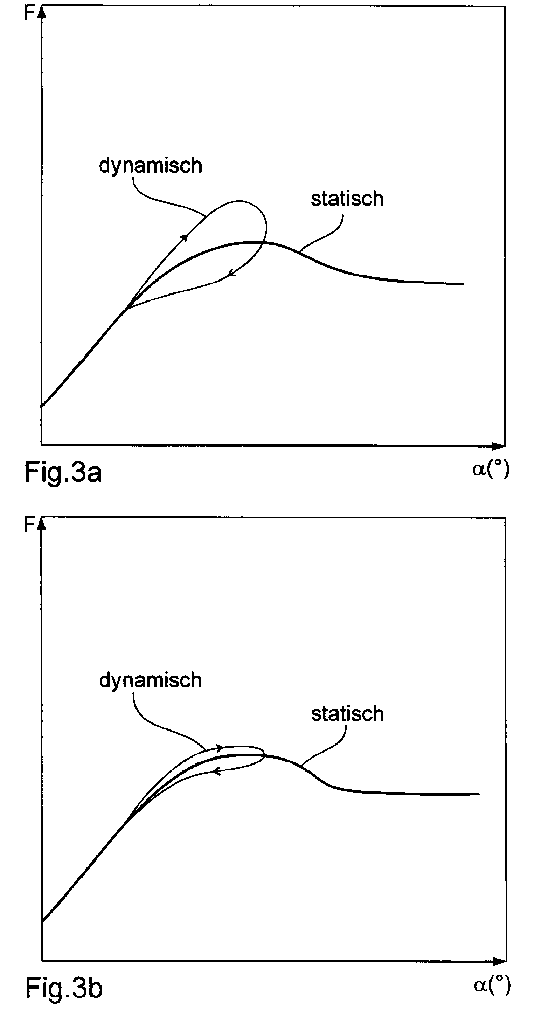

In Fig. 3a und 3b sind schematisch die Abhängigkeit der aerodynamischen Kräfte F (in beliebigen Einheiten) vom Anstellwinkel α bei einem herkömmlichen (Fig. 3a) bzw. einem erfindungsgemäßen Rotorblatt (Fig. 3b) grafisch dargestellt, das durch Veränderungen des Anströmwinkels infolge des Höhenprofils der Windgeschwindigkeit und/oder einer Schräganströmung ("Windscherung") und/oder der Turmschatten- oder Turmvorstauwirkung und vor allem infolge von Turbulenzen einer dynamischen Belastung (Auftriebskraftüberhöhung) unterliegt. Bei einerschwellenden Änderung des Anströmwinkels, wie sie zum Beispiel bei jedem Passieren des Turmvorstaus erfolgt, wird der Anströmwinkel zunächst erhöht und sinkt dann wieder auf den Ausgangswert ab. Hierbei durchläuft das Rotorblatt die in den Fig. 3a und 3b gezeigten Hystereseschleifen, deren Fläche proportional zur Schwingungsanregungsenergie ist, die beim durchlaufen der Hystereseschleifen in das Rotorblatt eingebracht wird. Es ist zu erkennen, daß der Hystereseeffekt durch die erfindungsgemäßen Maßnahmen wesentlich verringert wird, wobei speziell die dynamische Kraftüberhöhung deutlich geringer ausfällt. Die erfindungsgemäßen Rotorblätter erfahren daher eine deutlich geringere Schwingungsanregung.

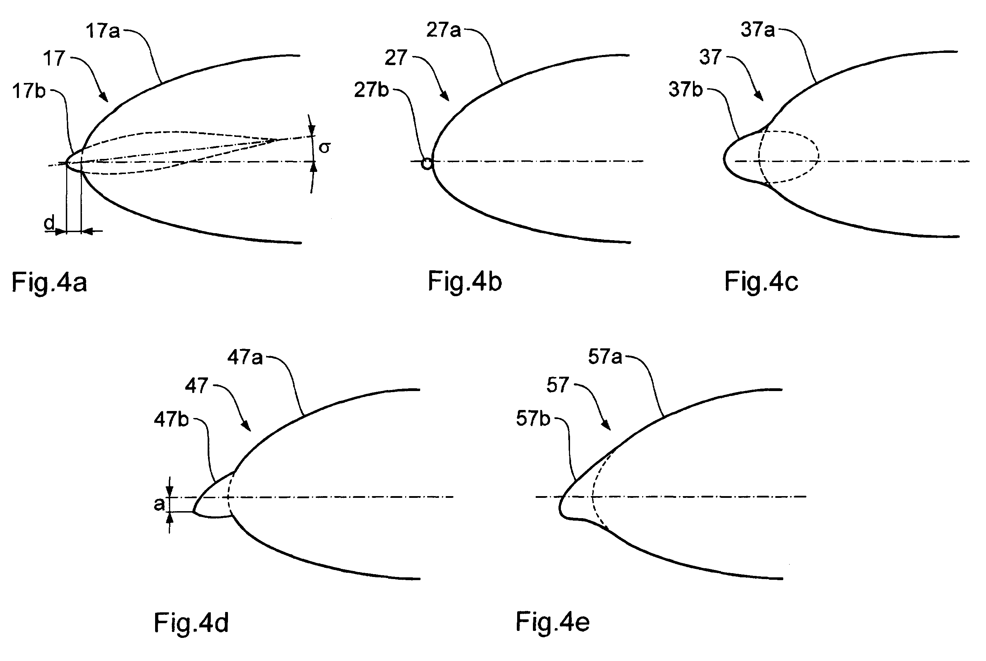

In Fig. 4a bis 4e sind in schematischen Querschnittsdarstellungen die jeweiligen Profilvorderkantenbereiche verschieden geformter Rotorblätter gezeigt, die jeweils ein dem Primärprofil überlagertes, aerodynamisch widerstandsarm geformtes Sekundärprofil aufweisen.

Fig. 4a zeigt ein Rotorblatt 17 mit einem dem Primärprofil 17a ähnlichen Sekundärprofil 17b, das um eine Distanz d über die Vorderkante des Primärprofils vorsteht, die etwa 3% von dessen Länge ausmacht, und dessen Profilsehne (d.h. die Verbindungslinie zwischen Profilvorder- und -hinterkante) um einen kleinen Winkel σ gegenüber der Profilsehne des Primärprofils geneigt ist.

Fig. 4b zeigt ein Rotorblatt 27, bei dem auf der Vorderkante des Primärprofils 27a ein im Querschnitt annähernd kreisförmiges Schwingungsdämpfungs-Profil 27b aufgesetzt ist. Diese Ausführung kann in praxi auf sehr einfache Weise durch Aufkleben eines Drahtes bzw. Stabes auf ein herkömmliches Rotorblatt realisiert werden.

Fig. 4c zeigt ein Rotorblatt 37, bei dem in die Vorderkante des Primärprofils 37a ein im Querschnitt elliptisches Profil 37b eingesetzt ist, das zu etwa der Hälfte seiner Länge und um etwa 10% der Länge des Primärprofils gegenüber diesem vorsteht.

Fig. 4d und 4e illustrieren Rotorblätter 47 bzw. 57, bei denen dem Primärprofil 47a bzw. 57a ein mit einer Anströmkante versehenes sekundäres Tragflügelprofil 47b bzw. 67b eingefügt ist, wobei die Anströmkante gegenüber der Längsachse des Primärprofils um einen Abstand a von etwa 10% der Profildicke zu dessen Unterseite hin versetzt ist. Beim Profil 57 gemäß Fig. 4e sind - im Unterschied zum Profil 47 aus Fig. 4d - beide Übergangsbereiche zwischen dem Primär- und dem Sekundärprofil zur weiteren aerodynamischen Optimierung und Vermeidung von Leistungsverlusten kantenfrei "geglättet" ausgeführt.

Das Sekundärprofil kann in das Primärprofil bereits bei der Herstellung der Grundform des Rotorblattes eingeformt werden, es ist aber auch eine nachträgliche Aufbringung auf mit bekanntem Primärprofil vorgefertigte Rotorblätter - etwa durch eine hochfeste Klebverbindung - möglich, was insbesondere auch eine nachträgliche Verbesserung des Schwingungsverhaltens von bereits in Betrieb befindlichen Anlagen ermöglicht.

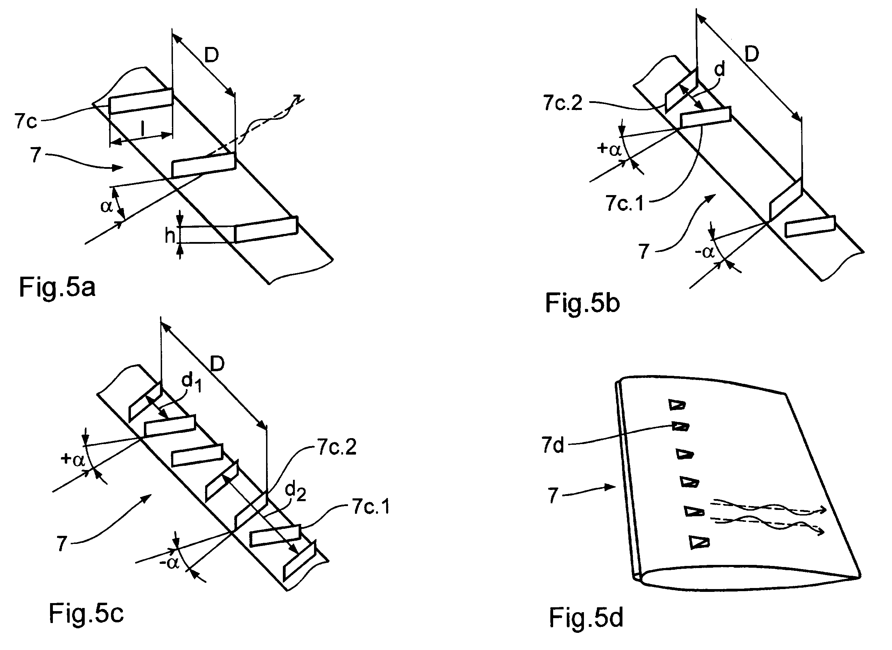

Fig. 5a bis 5e zeigen in schematischen (nicht maßstabgerechten) perspektivischen Darstellungen verschiedene Arten von für Windkraftanlagen geeigneten Vortex-Generatoren als auftriebserhöhende Mittel, jeweils in einer Ausschnittsdarstellung eines damit versehenen Rotorblattes 7. Hierbei sind für die Vortex-Generatoren in Fig. 5a bis 5c, die auf der Rotorblattoberseite aufrechtstehende rechteckige Strömungsablenkflächen aufweisen, die optimierungsrelevanten Größen Anstellwinkel α, Länge l, Höhe h, Einzelflächenabstand im Flächenpaar oder -quadrupel d bzw. d1 bzw. d2 sowie Generatorabstand D gezeigt.

Die Ausführungen gemäß den Figuren 5a bis 5c unterscheiden sich hauptsächlich dadurch voneinander, daß bei Fig. 5a alle Strömungsablenkflächen 7c.1 unter demselben Winkel zur Blattvorderkkante ausgerichtet sind, während bei Fig. 5b eine paarweise Anordnung von Flächen 7c.1, 7c.2 vorgesehen ist, wobei die Flächen einen Winkel von +α bzw. von -α mit Normalen auf die Blattvorderkante einschließen, und während sich bei Fig. 5c zusätzlich die Flächenpaare 7c.1, 7c.2 alternierend zur Rotorblattvorder- oder -hinterkante hin öffnen.

Die Ausführung gemäß Fig. 5d weist rampen- oder keilförmige Erhebungen 7d auf der Oberseite des Rotorblattes 7b auf. Diese können in der Draufsicht die Form eines gleichschenkligen Dreiecks - wie in der Figur gezeigt - oder auch eines rechtwinkligen Dreiecks haben.

Die Dimensionierung durch Wahl geeigneter Werte der o.g. Größen erfolgt derart, daß für den Normalbetrieb - d.h. für den Windgeschwindigkeitsbereich, in dem kein Stall-Effekt auftritt - der Auftrieb des Rotorblattes mit Sekundärprofil auf den Wert des Primärprofils (ohne Vorsehen eines Sekundärprofils) angehoben wird, sofern dieser durch die Anbringung des Sekundärprofils etwas verringert war.

Die Vortex-Generatoren werden dabei gegebenenfalls nachträglich auf das aus Primär- und Sekundärprofil gebildete Rotorblatt aufgesetzt, insbesondere aufgeklebt.

Eine weitere Ausführung des erfindungsgemäßen Rotorblatts ist in der Zeichnung nicht dargestellt. Hierbei ist das Sekundärprofil in radialer Richtung des Blattes mit einem veränderlichen Querschnitt ausgeführt. Hierbei folgt die Geometrie des Sekundärprofils insbesondere maßstäblich der Verjüngung des Blattprofils. Dabei ist durch die Strömungsablösung im Bereich der Blatthinterkante erzeugte Kraftwirkung über einen Längenabschnitt des Blattes im wesentlichen gleich der durch die Strömungsablösung im Bereich der Profilvorderkante erzeugten Kraftwirkung, so daß auch das lokale Torsionsmoment ausglichen ist.

Die Erfindung beschränkt sich in ihrer Ausführung nicht auf die vorstehend angegebenen bevorzugten Ausführungsbeispiele. Vielmehr ist eine Anzahl von Varianten möglich, welche von der dargestellten Lösung auch in anders gearteter Ausführung Gebrauch machen.

So ist neben dem Einsatz der oben skizzierten (sowie auch anders geformter) Vortex-Generatoren oder alternativ hierzu grundsätzlich auch die Ausbildung von Kanälen im Primärprofil möglich, über die Luft aus der Strömungs-Grenzschicht auf der Blattoberseite abgesaugt oder in diese eingeblasen werden kann. Diese Abwandlung ist aber herstellungstechnisch aufwendiger und auf neu zu konstruierende Anlagen beschränkt.

## Patentansprüche

1. Rotorblatt (7; 17; 27; 37; 47; 57) für eine nach dem Passiv-Stall- oder Aktiv-Stall-Prinzip arbeitende Windkraftanlage (1), das ein Tragflügelprofil (17a; 27a; 37a; 47a; 57a) aufweist, dessen Profilvorderkante durch Anfügung eines Sekundärprofils (17b; 27b; 37b; 47b; 57b) ergänzt ist, dadurch gekennzeichnet, daß das ausschließlich fest mit dem Tragflügelprofil verbundene oder in dieses eingestrakte Sekundärprofil (17b; 27b; 37b; 47b; 57b) sich - ausgehend von der Blattspitze des Rotorblattes - über einen Teilbereich des Tragflügelprofils (17a; 27a; 37a; 47a; 57a) in dessen Längsrichtung erstreckt und derart aerodynamisch ausgebildet und relativ zum Tragflügelprofil (17a; 27a; 37a; 47a; 57a) derart angeordnet ist, daß es wenigstens in einem Bereich des Anströmwinkels, der im wesentlichen mit demjenigen Anströmwinkel beginnt, bei dem die Strömungsablösung an der Profilhinterkante des Tragflügelprofils (17a; 27a; 37a; 47a; 57a) einsetzt, eine mit dem Anströmwinkel des Tragflügelprofils (17a; 27a; 37a; 47a; 57a) zunehmende partielle Strömungsablösung im Bereich der Profilvorderkante des Tragflügelprofils (17a; 27a; 37a; 47a; 57a) derart erzeugt, daß die durch die mit dem Stallzustand entstehende Strömungsablösung im rückwärtigen Bereich des Tragflügelprofils auftretende Kraftwirkung im wesentlichen kompensiert ist.

2. Rotorblatt nach Anspruch 1, dadurch gekennzeichnet, daß sich das Sekundärprofil (17b; 27b; 37b; 47b; 57b) über eine derartige Länge des Rotorblattes erstreckt, daß dessen Verformung, bei den maximal zu erwartenden stoßartigen Änderungen der Anströmung einen vorgegebenen Maximalwert nicht überschreitet.

3. Rotorblatt nach Anspruch 1 oder 2, dadurch gekennzeichnet, daß zur im wesentlichen vollständigen Kompensation des durch die Auftriebsverminderung des Tragflügelprofils infolge des Sekundärprofils bedingten Rotormomentverlustes in einem Bereich des Tragflügelprofils (17a; 27a; 37a; 47a; 57a) auftriebserhöhende Mittel (7c; 7c.1, 7c.2; 7d) vorgesehen sind.

4. Rotorblatt nach Anspruch 3, dadurch gekennzeichnet, daß die auftriebserhöhenden Mittel sich im wesentlichen von dem nabenseitigen Ende bis in den mittleren Bereich des Tragflügelprofils (17a; 27a; 37a; 47a; 57a) erstrecken.

5. Rotorblatt nach einem der Ansprüche 3 oder 4, dadurch gekennzeichnet, daß als auftriebserhöhende Mittel eine Mehrzahl von im Bereich der Profilvorderkante oder der Profiloberseite angeordneten Vortex-Generatoren (7c; 7c.1, 7c.2;7d) und/oder wenigstens eine Nasenklappe und/oder wenigstens eine Endklappe und/oder Mittel zur Grenzschichtabsaugung oder -ausblasung vorgesehen sind.

6. Rotorblatt nach einem der vorhergehenden Ansprüche, dadurch gekennzeichnet, daß das Sekundärprofil (17b; 37b; 47b; 57b) an der Vorderkante des Tragflügelprofils (17a; 27a; 37a; 47a; 57a) zur Erzeugung eines partiellen Strömungsabrisses im wesentlichen den Querschnitt eines Ellipsen- oder Tragflügelsegmentes aufweist.

7. Rotorblatt nach Anspruch 6, dadurch gekennzeichnet, daß das Sekundärprofil (17b; 37b; 47b; 57b) dem Primärprofil (17a; 37a; 47a; 57a) mit gegenüber dessen Profilsehne geneigter großer Achse bzw. Profilsehne und/oder gegenüber der Profilsehne des Primärprofils versetztem Hauptscheitel bzw. versetzter Profilvorderkante an- oder eingefügt ist.

8. Rotorblatt nach einem der vorhergehenden Ansprüche, dadurch gekennzeichnet, daß das Sekundärprofil (17b; 27b; 37b; 47b; 57b) in Bezug auf die Vorderkante des Primärprofils (17a; 27a; 37a; 47a; 57a) um einen Abstand vorsteht, der im wesentlichen zwischen 0,5% und 15% der Profiltiefe des Rotorblattes liegt.

9. Rotorblatt nach einem der vorhergehenden Ansprüche, dadurch gekennzeichnet, daß das Sekundärprofil in radialer Richtung des Blattes mit einem veränderlichen Querschnitt ausgeführt ist.

10. Rotorblatt nach Anspruch 9, dadurch gekennzeichnet, daß die Veränderung Querschnitts des Sekundärprofils derart gewählt ist, daß die durch Strömungsablösung im Bereich der Blatthinterkante erzeugte Kraftwirkung über einen Längenabschnitt des Blattes im wesentlichen der durch die Strömungsablösung im Bereich der Profilvorderkante erzeugten Kraftwirkung entspricht.
